# EUROPÄISCHE PATENTANMELDUNG

(11) **EP 1 491 742 A2**
(43) Veröffentlichungstag der Anmeldung: **29.12.2004**
(21) Anmeldenummer: 04013978.4
(22) Anmeldetag: 15.06.2004
(51) Int. Cl.: F02B 23/10, F02M 67/00

(54) **Verfahren zum Betrieb einer fremdgezündeten Brennkraftmaschine**

(30) Priorität: 24.06.2003 DE 10328165
(71) Anmelder: DaimlerChrysler AG, 70567 Stuttgart (DE)
(72) Erfinder: Frey, Jürgen, 73728 Esslingen (DE); Huber, Gerd, 81737 München (DE); Karl, Günter Dr., 73732 Esslingen (DE); Krämer, Stephan Dr., 71409 Schwaikheim (DE)

(57) **Zusammenfassung**

Bei einem Verfahren zum Betrieb einer fremdgezündeten Brennkraftmaschine wird in den Zylindern (2) mit Brennstoff und Verbrennungsgas ein Gemisch gebildet, welches durch eine in den Brennraum (4) einragende Zündkerze (8) gezündet wird. Der Brennstoff ist den Zylindern (2) zumessbar durch direkte Abgabe in den jeweiligen Brennraum und durch Brennstoffabgabe in einen Ansaugbereich des Zylinders (2), wobei eine Steuereinheit (10) die Menge des in den Ansaugbereich abzugebenden Brennstoffes und die direkt in den Brennraum (4) abzugebende Brennstoffmenge in Abhängigkeit des Betriebspunktes der Brennkraftmaschine (1) aufeinander abstimmt und das Brennstoffgemisch konfiguriert. Um die Abgasemission der Brennkraftmaschine zu senken, ist vorgesehen, im Brennraum (4) ein inertes Brennstoffgrundgemisch mit hohem Abgasgehalt zu bilden und kurz vor dem Zündzeitpunkt ein zündfähiges Brennstoffgas in den Brennraum (4) einzublasen.

## Beschreibung

Die Erfindung betrifft ein Verfahren zum Betrieb einer fremdgezündeten Brennkraftmaschine, in deren Zylindern mit Brennstoff und Verbrennungsgas ein Gemisch gebildet wird, welches durch Zündfunken einer in einem in dem Zylinder ausgebildeten Brennraum einragenden Zündkerze gezündet und verbrannt wird, der im Oberbegriff des Patentanspruchs 1 angegebenen Gattung.

Aus der DE 199 45 544 A1 ist ein Verfahren bekannt, bei dem der Brennstoff den Zylindern zumeßbar ist durch direkte Abgabe in den jeweiligen Brennraum und durch zusätzliche Brennstoffabgabe in einen Ansaugbereich des Zylinders. Eine Steuereinheit bestimmt dabei die Menge des in den Ansaugbereich abzugebenen Brennstoffes und die direkt in den Brennraum abzugebende Brennstoffmenge in Abhängigkeit des Betriebspunktes der Brennkraftmaschine und konfiguriert das Brennstoffgemisch, wobei je nach Betriebspunkt ausschließlich innere oder äußere Gemischbildung durch Kraftstoffzumessung in den Ansaugbereich oder auch beide Vorgehensweisen kombiniert eingesetzt werden. Für den mittleren Lastbereich sieht das bekannte Verfahren die Bildung eines mageren Brennstoffgrundgemisches durch Saugrohreinspritzung in den Ansaugbereich des Zylinders vor, welches durch direkte Brennstoffabgabe in den Brennraum während des Kompressionstaktes auf ein örtlich zündfähiges Luftverhältnis angereichert werden soll. Eine solche Zündeinspritzung einer Brennstoffmenge zur örtlichen Gemischanfettung kann durch ein Direkteinspritzventil oder auch ein Einblasventil erfolgen, bei dem Brennstoff als Gemisch mit Verbrennungsgas in den Brennraum abgegeben wird. Die Zündeinspritzung erfolgt während des Kompressionstaktes in geringem Abstand vor dem Zündzeitpunkt, wodurch eine sehr magere Verbrennung im Zusammenhang mit der späten Zündeinleitung ermöglicht ist.

Der vorliegenden Erfindung liegt die Aufgabe zugrunde, ein Verfahren der gattungsgemäßen Art zu schaffen, mit dem bei einer mit kombinierbarer innerer und äußerer Gemischbildung betreibbaren Brennkraftmaschine die Abgasemission gesenkt wird.

Diese Aufgabe wird erfindungsgemäß durch ein Verfahren mit den Merkmalen des Patentanspruchs 1 gelöst.

Erfindungsgemäß ist vorgesehen, bei der Gemischbildung Abgas der Brennkraftmaschine beizumischen und dadurch im Brennraum ein inertes Brennstoffgrundgemisch mit hohem Abgasgehalt zu bilden und bei der Zündeinspritzung den abzugebenden Brennstoff mit einem sauerstoffhaltigen Frischgasstrom als Brennstoffgas in den Brennraum einzublasen. Durch sehr hohen Abgasgehalt kann die Abgasemission der Brennkraftmaschine äußerst wirksam gesenkt werden. Insbesondere bei niedrigen und mittleren Lastbereichen bei luftunterstützter Kraftstoffzumessung kann durch Einblasung die Abgasverträglichkeit des zu verbrennenden Brennstoffgemisches in überraschendem Maß gesteigert werden. Durch die Einblasung des Brennstoffes bei der Zündeinspritzung verdrängt das eingeblasene Volumen, welches aus einem abgasfreien Gemisch aus Brennstoff und sauerstoffhaltigem Verbrennungsgas besteht, das hochkonzentrierte Abgasgemisch und ermöglicht eine Zündung. Der Austausch des abgasreichen Gemisches gegen abgasfreies Brennstoffgemisch erfolgt bei der späten Zündeinspritzung während des Kompressionstaktes ohne nennenswerte Mischung unmittelbar vor der Zündung, wodurch die Entflammung gewährleistet ist. Dies führt dazu, daß die bisher möglichen Abgasrückführungsraten wenigstens bei bestimmten Betriebszuständen auf den 5-fachen Wert angehoben werden können. Die Brennstoffeinblasung als luftunterstützte Direkteinspritzung ermöglicht darüber hinaus eine leichte Nachrüstung bei Brennkraftmaschinen mit bisher bekannten Einspritzsystemen. Vorteilhaft wird das Brennstoffgas bei der Zündeinspritzung in den Umgebungsbereich der Zündkerze des Zylinders eingeblasen, wodurch an der Zündkerze zündwilliges Gemisch bereitgestellt werden kann und das im übrigen Brennraum befindliche Gemisch mit hohem Abgasgehalt nach der Zündung mit verbrannt wird. Das beizumischende Abgas wird bevorzugt wenigstens teilweise durch Rückhaltung der Verbrennungsabgase durch Einstellung der Steuerzeiten des Ladungswechsels des Zylinders bereitgestellt. Mit geringem baulichen Aufwand kann durch entsprechende Adaption der Steuerzeiten der Gaswechselventile ein Unterdruck im Brennraum erzeugt werden, welcher während des Auslaßtaktes Abgas im Brennraum zurückhält. Das beizumischende Abgas kann aber auch vorteilhaft durch Abgasrückführung aus dem Abgastrakt der Brennkraftmaschine in dem Brennraum bereitgestellt werden.

Bei der Zündeinspritzung kann der zuzumessende Brennstoff mit Verbrennungsluft eingeblasen werden, welche einen genügenden Sauerstoffgehalt aufweist, um bei der erfindungsgemäßen Verdrängung des gegenüber der Luft erheblich sauerstoffärmeren Abgasgemisches im Brennraum die Vorteile der Erfindung sicherzustellen und die Abgasverträglichkeit des Gesamtgemisches erheblich zu steigern.

Das für die Zündeinspritzung vorgesehene Einblasventil kann von der Kraftstoffzumessung unabhängig gesteuert werden, da bei dem erfindungsgemäßen Verfahren die wesentliche Aufgabe der Zündeinspritzung die Gewährleistung der Entflammung des abgasreichen Gemisches ist und von der betriebspunktabhängigen Brennstoffmenge losgelöst betrachtet werden kann. Vorteilhaft wird die Steuerung der Zündeinspritzung an die Steuerung der Gaswechselventile der Zylinder gekoppelt, wodurch einfache Konstruktionen für den Ventiltrieb des Einblasventils für die Zündeinspritzung ausreichend sind. Besonders vorteilhaft wird dabei die Verbrennungsluft von einem Pumpelement des Einblasventils gefördert, welches von der Nockenwelle der Brennkraftmaschine zwangsgesteuert ist.

Ausführungsbeispiele der Erfindung werden nachstehend anhand der Zeichnung näher erläutert. Es zeigen:
- Fig. 1: einen schematischen Längsschnitt durch den Zylinder einer Brennkraftmaschine,
- Fig. 2: eine grafische Darstellung der Ventilsteuerzeiten und des Zylinderdruckes bei dem erfindungsgemäßen Verfahren,
- Fig. 3 bis 5: schematische Darstellungen der Gemischbildungen im Zylinder zu den in Fig. 2 angegebenen Zeitpunkten t1, t2 und t3
- Fig. 6: eine schematische Darstellung der Gemischbildung mit Zündeinspritzung im Zylinder zum Zeitpunkt t4 in Fig. 2 mit Einblasung eines Brennstoffgases,
- Fig. 7: einen Längsschnitt eines Einblasventils.

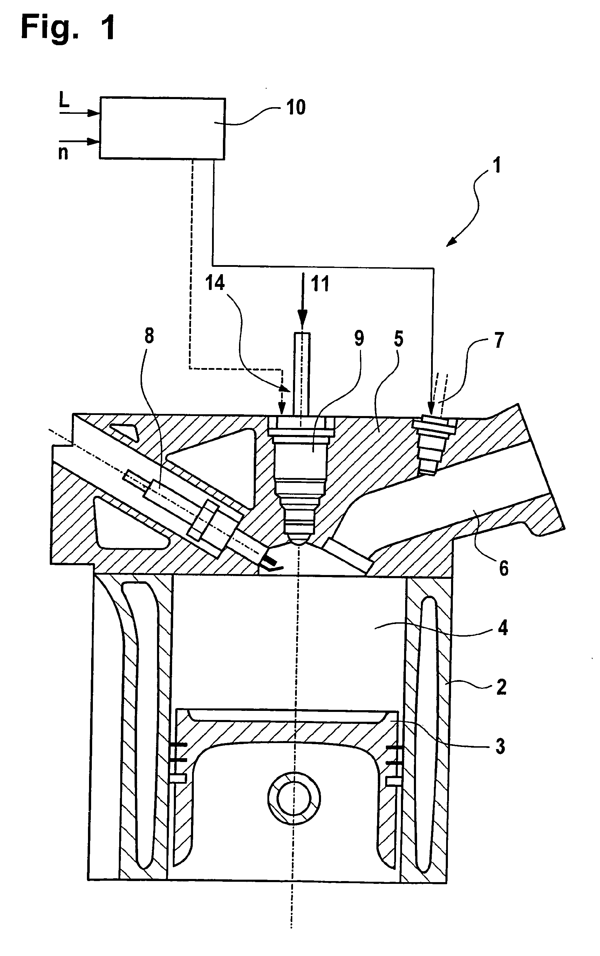

Bei der in Fig. 1 dargestellten Brennkraftmaschine 1 ist in jedem Zylinder 2 in bekannter Weise ein Hubkolben 3 angeordnet, welcher einen Brennraum 4 begrenzt und von einem Zylinderkopf 5 abgeschlossen ist. Im Brennraum 4 wird zum Antrieb des Kolbens 3 ein Gemisch aus Brennstoff und Verbrennungsgas durch den Zündfunken einer am Zylinderkopf 5 angeordneten Zündkerze gezündet und verbrannt. Das Verbrennungsgas wird dem Brennraum durch mindestens einen Einlaßkanal 6 zugeführt.

Für die Abgasabführung sind die Zylinder 2 mit entsprechenden Auslaßkanälen ausgestattet. Der Ladungswechsel der Zylinder wird von hier nicht dargestellten Gaswechselventilen gesteuert, welche in den Einlaßkanälen und Auslaßkanälen angeordnet sind.

Das Brennstoffzuführsystem der Brennkraftmaschine 1 umfaßt mindestens einen Saugrohrinjektor 7, welcher nach Art der äußeren Gemischbildung Brennstoff in den Einlaßkanal abgibt. Dabei kann allen Zylindern 2 der Brennkraftmaschine 1 ein gemeinsamer Saugrohrinjektor 7 zugeordnet sein und in einer gemeinsamen Saugleitung angeordnet sein (Singlepoint-Einspritzung) oder jedem Zylinder 2 ein jeweiliger Saugrohrinjektor 7 zugeordnet sein (Multipoint-Einspritzung). Der Saugrohrinjektor 7 ist Teil eines Brennstoffzuführsystems, welches außerdem pro Zylinder 2 mindestens ein weiteres im Zylinder 5 in zentraler Lage eingebautes Einblasventil 9 umfaßt, welches Brennstoff mit sauerstoffreichem Verbrennungsgas direkt in den Brennraum 4 abgibt. Zu diesem Zweck ist an das Einblasventil 9 eine Brennstoffzufuhr 14 und eine Frischluftzufuhr 11 angeschlossen. Die im jeweiligen Betriebspunkt der Brennkraftmaschine zuzumessende Brennstoffmenge wird von einer Steuereinheit 10 bestimmt, der zur Ermittlung des Betriebspunktes der Brennkraftmaschine 1 und der entsprechenden Brennstoffmenge geeignete Betriebsparameter eingegeben werden, beispielsweise die Betriebslast L und/oder die Drehzahl n der Brennkraftmaschine 1.

Nach der vorliegenden Erfindung wird das Einblasventil 9 wenigstens in bestimmten Betriebsbereichen der Brennkraftmaschine zur Durchführung einer Zündeinspritzung eingesetzt, welche während des Kompressionstaktes des jeweiligen Zylinders erfolgt und ein ansonsten mageres Grundgemisch im Brennraum 4 auf ein zündfähiges Maß anreichert. Dabei veranlaßt die Steuereinheit 10 die Vorbereitung eines mageren Grundgemisches durch entsprechende Ansteuerung der von ihr steuerbaren Zumeßeinrichtungen, d.h. wenigstens den Saugrohrinjektor 7. Es ist jedoch auch möglich, zur Einbringung der Kraftstoffmenge, beispielsweise wenn diese in Abhängigkeit des Betriebspunktes einstellbar ist, der Steuereinheit 10 auch Direkteinspritzventile zuzuordnen. Dabei könnte das Einblasventil 9 ebenso wie der Saugrohrinjektor 7 über eine strichliert dargestellte Steuerleitung verbunden sein, wobei die Steuereinheit 10 die Freigabe der Injektoren aufeinander abstimmt und durch Kombination der inneren mit der äußeren Gemischbildung das Brennstoff-/Luftgemisch konfiguriert.

Die Betätigung des Einblasventils im Rahmen der Zündeinspritzung zur Anreicherung des Grundgemisches im Brennraum kann nach der vorliegenden Erfindung unabhängig von der betriebspunktabhängigen Brennstoffzumessung erfolgen. Es kann daher auch ein Brennstoffzuführsystem vorteilhaft sein, indem ein unabhängig angesteuertes Einblasventil zusätzlich zu den von der Steuereinheit 10 zur betriebspunktabhängigen Kraftstoffzumessung ansteuerbaren Einrichtungen zugeordnet ist. Bei der Gemischbildung wird im Brennraum mit dem von der Steuereinheit 10 zugemessenen Brennstoff ein mageres Grundgemisch mit einem hohen Abgasgehalt gebildet. Das Abgas kann dabei im Wege der Abgasrückführung aus der Auslaßleitung der Brennkraftmaschine bereitgestellt werden.

Besonders vorteilhaft wird das Abgas im Brennraum nach der Verbrennung zurückgehalten, wobei durch geeignete Einstellung der Steuerzeiten der Gaswechselventile auf einfache Weise ein Unterdruck im Brennraum erzeugbar ist, welcher das Abgas am Verlassen des Brennraumes bei geöffnetem Auslaßventil hindert bzw. aus dem Auslaßkanal zurück in den Brennraum 4 saugt. Bei der Einblasung von Brennstoff im Rahmen der Zündeinspritzung verdrängt das in den Brennraum eintretende Verbrennungsgas bei der Einblasung das Grundgemisch mit hohem Abgasgehalt. Das Einblasventil 9 ist in der Nähe der Zündkerze 8 angeordnet und bläst sauerstoffreiches Verbrennungsgas bei der Zündeinspritzung in den Bereich der Elektroden der Zündkerzen, wodurch zum Zündzeitpunkt an der Zündkerze zündwilliges Gemisch vorliegt. Nach der Zündung des sauerstoffreichen Verbrennungsgases wird das abgasreiche Gemisch im übrigen Brennraum entflammt, wobei die Zündeinspritzung die Möglichkeit schafft, im Brennraum ein selbst schwer oder nicht entflammbares Grundgemisch zu bilden und mit zu verbrennen. Durch die Einblasung des Brennstoffes für die Zündeinspritzung gemeinsam mit sauerstoffreicher Verbrennungsluft wird die Wirkung der Verdrängung des Grundgemisches aus dem Bereich der Zündkerze verstärkt. Die erfindungsgemäße Durchführung der Zündeinspritzung mit einem luftunterstützten Verfahren erlaubt eine enorme Anhebung des möglichen Abgasgehaltes im Grundgemisch gegenüber bisher denkbaren Abgasrückführungsraten und trägt so maßgeblich zu einer Senkung der Abgasemission der Brennkraftmaschine 1 bei.

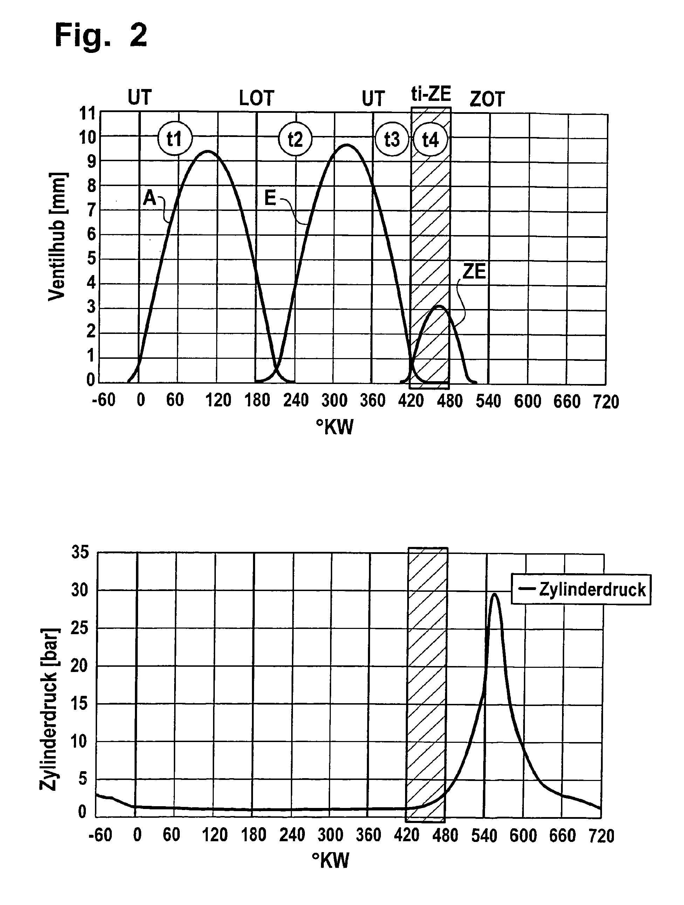

Fig. 2 zeigt in einem Schaubild den zeitlichen Verlauf der Ventilhübe des Auslaßventils A und des Einlaßventils E eines Zylinders und den Kolbenhub des Einblaßventils Z während eines Arbeitsspiels. Im unteren Schaubild der Fig. 2 ist der Zylinderdruck während des Arbeitsspiels dargestellt. Die Zündeinspritzung erfolgt in einem Intervall ti-ZE, welches vor dem für die Zündung vorgesehenen oberen Totpunkt (ZOT) liegt. Zu diesem Zeitpunkt ist der Ventilhub des Einlaßventils E wenigstens annähernd in der geschlossenen Stellung und die Verdichtung des Gemisches beginnt mit einhergehendem Anstieg des Zylinderdruckes. Der Ventiltrieb des Einblasventils wird zweckmäßig so eingestellt, daß der Kolbenhub des Einblasventils ZE seinen Scheitelpunkt bei vollständiger Öffnung des Ventils während des Zündeinspritzintervalls ti-ZE erreicht.

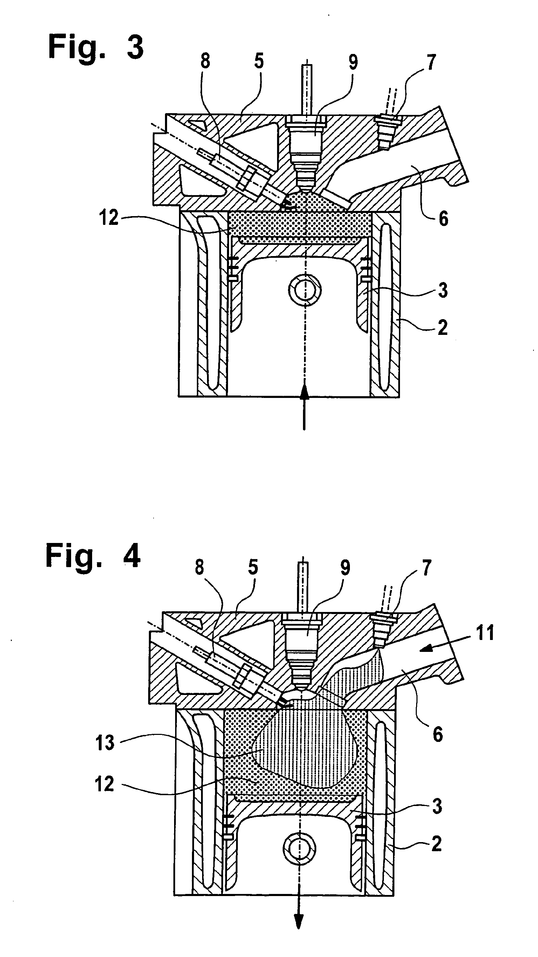

Mit t1 bis t4 sind verschiedene Zeitpunkte bzw. Zustände über den Kurbelwinkel bezeichnet, die den nachfolgend noch erläuterten Fig. 3 bis 6 entsprechen. Der Ventiltrieb des Einblasventils kann vorteilhaft an die Gaswechselventile gekoppelt werden. Eine einfache Bauweise ist dabei möglich, wenn das bewegliche Pumpelement des Einblasventils von einer Nockenwelle der Brennkraftmaschine zwangsgesteuert wird. Auf diese Weise ist ein eigenständiger Ventiltrieb für die Zündeinspritzung nicht erforderlich.

In Fig. 3 ist die Stellung des Kolbens 3 im Zylinder 2 zum Zeitpunkt t1 des Diagramms gemäß Fig. 2 gezeigt. Dabei sind die Ventilsteuerzeiten so gewählt, daß im anschließenden Ansaugtakt eine große innere Abgasrate von rückgehaltenem Abgas vorhanden ist. Das Abgasvolumen ist in Fig. 3 mit dem Bezugszeichen 12 bezeichnet, im übrigen stimmen die Bezugszeichen für gleiche Teile mit denjenigen der Fig. 1 überein.

Daran schließt sich die in Fig. 4 dargestellte Ansaugphase an, bei der das Einlaßventil im Ansaugkanal 6 geöffnet ist. Dies ist der Zeitpunkt t2 in Fig. 2. Mittels des Kanalinjektors 7 wird Kraftstoff eingespritzt und mit der angesaugten Luft vermischt, wobei gegebenenfalls auch rückgeführtes Abgas zusätzlich zugeführt wird. Die Zuführung der Verbrennungsluft ist mit dem Pfeil 11 bezeichnet. Durch das bereits vorher im Brennraum 4 befindliche rückgehaltene Abgas ergeben sich bei Zuführung des Krafstoff/Luft-Gemisches zwei Volumenbereiche, nämlich mit hohem Abgasgehalt 12 und Kraftstoff/Luft-Gemisch 13.

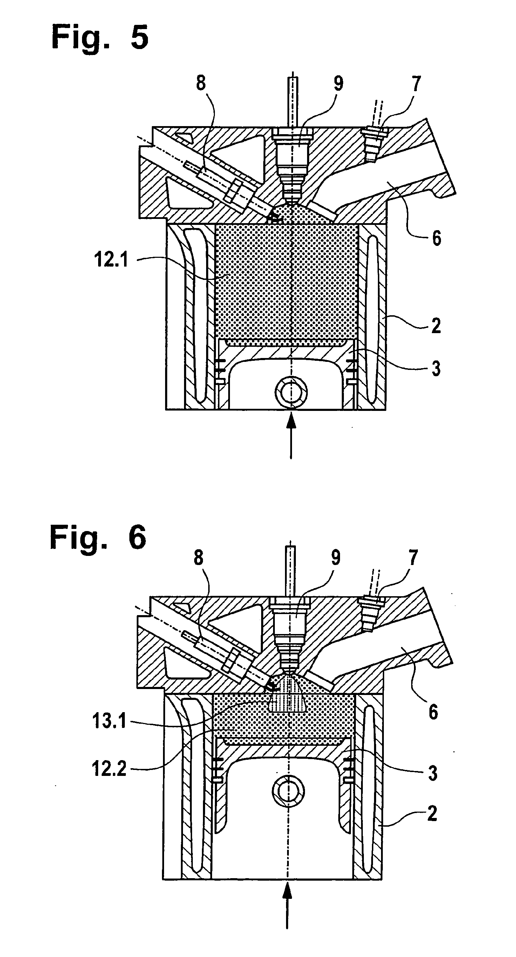

Durch die weitere Abwärtsbewegung des Kolbens 3 und noch geöffnetem Einlaßventil ergibt sich eine Vermischung beider Volumina, wie dies in Fig. 5 dargestellt ist. Dies entspricht dem Zeitpunkt t3 in Fig. 2. Durch die Verdichtung des Gemisches mit hohem Abgasanteil wird somit ein Gemisch 12.1 erzeugt, das nicht entflammbar ist.

In einer Zeitzone ti-ZE, die gemäß Fig. 2 bei einem Kurbelwinkel von etwa 420° beginnt, erfolgt die Einspritzung einer Zündeinspritzmenge 13.1 eines Kraftstoff/Luft-Gemisches mit λ=1 oder zumindest ∼1 unmittelbar an die Zündkerze. Dies geschieht durch das Einblasventil 9 und ist aus Fig. 6 ersichtlich. Da diese Einspritzung kurz vor der Zündung erfolgt, liegt zum Zündzeitpunkt an der Zündkerze 8 ein mit Sicherheit entflammbares Gemisch vor. Dabei reicht zur Zündung eine Kleinstmenge der durch das Einblasventil 9 zugeführten Luft und Kraftstoff. Die erfolgte Zündung bewirkt dann auch die Verbrennung des übrigen im Brennraum vorhandenen Gemisches 12.2, selbst wenn dieses einen hohen Abgasanteil enthält.

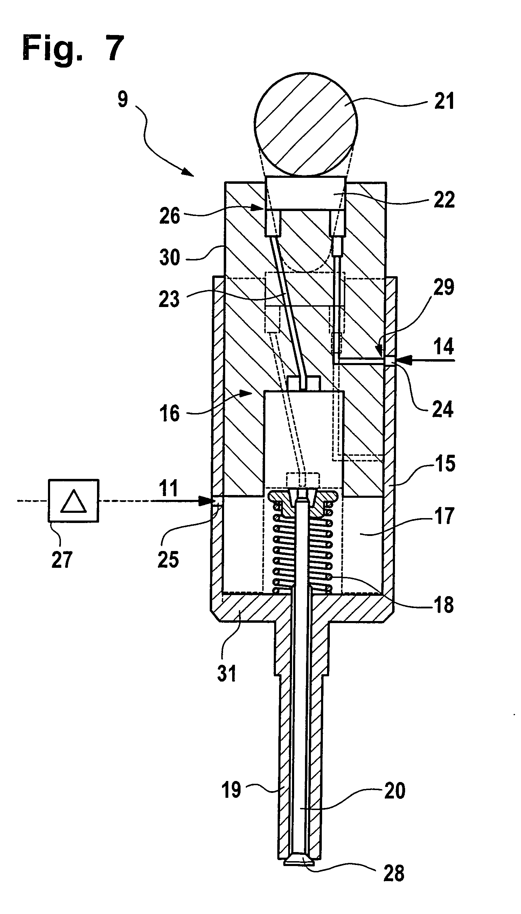

Fig. 7 zeigt einen Schnitt eines vorteilhaften Ausführungsbeispiels für ein Einblasventil 9, welches zur Durchführung einer Zündeinspritzung in den Zylinderkopf der in Fig. 1 dargestellten Brennkraftmaschine einsetzbar ist. Das Einblasventil 9 ist als Kolben/Zylindereinheit ausgebildet, wobei das längsbewegliche Kolbenelement 16 in einem Ventilgehäuse 15 angeordnet ist und mit einem Boden 31 des Ventilgehäuses 15 eine Einblaskammer 17 begrenzt. Am Boden 31 des Ventilgehäuses 9 ist eine langgezogene Einblasdüse 19 ausgebildet, welche in montiertem Zustand des Einblasventils in den Brennraum des Zylinders einragt. Die Einblasdüse 19 hat in ihrem Innenrohr eine fluidische Verbindung zur Einblaskammer 17 und wird von einer Ventilnadel 20 verschlossen, welche an einem freien Ende der Einblasdüse 19 mit einem Verschlußglied 28 aufliegt.

Die Ventilnadel 20 ist dabei als nach außen öffnendes Ventilglied ausgebildet, wobei das Verschlußglied 28 unter dem Druck im Innenraum des Ventilgehäuses 15 gegen die Rückstellkraft einer Feder 18 öffnet. Die Rückstellfeder 18 ist im vorliegenden Ausführungsbeispiel als konzentrisch zur Ventilnadel 20 angeordnetes Schraubenfederelement ausgebildet, welches sich am Boden 31 des Ventilgehäuses 15 einerseits und an einem auf die Ventilnadel 20 wirkenden Ventilteller abstützt.

Den Ventiltrieb des Einblasventils 9 bildet im wesentlichen ein Steuernocken 21, welcher auf das längsbewegliche Kolbenelement 16 wirkt. Das Kolbenelement 16 ist dabei bis zum Boden 31 des Ventilgehäuses 15 mit seiner unteren Kolbenringfläche niederdrückbar. Im Zentrum der Kolbenringfläche ist dabei eine Ausnehmung zur Aufnahme des vom Boden 31 hervorstehenden Federtriebs der Ventilnadel 20 vorgesehen. Der Steuernocken 21 wird von einer Nockenwelle der Brennkraftmaschine betätigt. Der Ventiltrieb des Einblasventils 9 ist dadurch unabhängig von den Betriebspunktabhängig steuerbaren Brennstoffzumeßeinrichtungen, d.h. im Ausführungsbeispiel nach Fig. 1 vorgesehenen Saugrohrinjektor 7, dessen Betätigung von der Steuereinheit bestimmt ist.

Die Versorgung des Einblasventils 9 mit Brennstoff und Verbrennungsgas, welche gemeinsam von der Einblasdüse 19 abgegeben werden, wird von einer Schlitzsteuerung freigegeben und abgesperrt, in welcher das Kolbenelement 16 des Einblasventils 9 das Steuergebiet bildet. Für die Schlitzsteuerung ist das Ventilgehäuse 15 von Steuerschlitzen 24, 25 durchbrochen, an welche die Luftzuführung 11 bzw. die Brennstoffzuführung 14 angeschlossen sind. Die Steuerschlitze 24, 25 sind vom Umfang 30 des Kolbenelementes 16 abdeckbar. Eine Freigabe der Brennstoffzuführung und der Luftzuführung ins Innere des Einblasventils 9 erfolgt im oberen Totpunkt der Hubbewegung des Kolbenelementes. Die Steuerschlitze 24, 25 sind derart angeordnet, daß das untere Ende des Kolbenelementes 16 die Steuerkante der Schlitzsteuerung bildet und im oberen Totpunkt der Hubbewegung sauerstoffreiches Verbrennungsgas unmittelbar in die Einblaskammer 17 einströmen kann. Der Steuerschlitz 24 der Brennstoffzufuhr 14 ist in größerem Abstand zum Boden 31 des Ventilgehäuses 15 angebracht und das Kolbenelement 16 weist an seinem Umfang eine mit dem Schlitz 24 in Überdeckung bringbare Einlaßöffnung 29 eines Versorgungskanals 23 auf. Der Versorgungskanal 23 ist im Inneren des Kolbenelementes 16 ausgebildet und endet im Einlaßbereich der Einblasdüse 19 bzw. deren Ventilnadel 20.

In dem Versorgungskanal 23 ist eine Kraftstoffkammer 22 ausgebildet, in der das einzublasende Brennstoffvolumen aufgenommen ist. Auf die Kraftstoffkammer und den Vorlauf in dem Versorgungskanal 23 wirkt ein Pumpelement 26 für Kraftstoff, das von dem Steuernocken 21 beaufschlagt ist. Der stromab der Brennstoffkammer 22 liegende Abschnitt des Versorgungskanals 23 mündet im zentralen Bereich innerhalb des von der Kolbenringfläche begrenzten Zentrums des Kolbenelementes 16 in die Einlaßkammer 17 und liegt etwa auf einer Längsachse der Einblasdüse 19. Die Brennstoffkammer 22 und das Volumen der Einblaskammer 17 werden im Hinblick auf die sichere Entflammung der Inertgasmengen im Brennraum durch die Zündeinspritzung abgestimmt, so daß mit einem kleinen und baulich einfachen Pumpe/Düse-Element eine luftunterstützte Zündeinspritzung darstellbar ist. Vorteilhaft betragen die Volumina der Einblaskammer 17 von 5 mg bis 25 mg Luft bei einem Brennstoffvolumen von 0,5 mg bis 8 mg pro Einblasvorgang. Die Mengenverhältnisse sind durch Zuführung der Medien unter Druck veränderbar; beispielsweise kann in der Luftzuführung 11 eine Vordruckpumpe 27 als Kompressor eingebaut sein. In einer vorteilhaften Abstimmung des Einlaßventils 9 beträgt die Brennstoffmenge ca. 1 mg bei einem Vordruck von 3,8 bar und einer Luftmenge von ca. 14 g unter atmosphärischem Druck.

## Patentansprüche

1. Verfahren zum Betrieb einer fremdgezündeten Brennkraftmaschine, in deren Zylindern (2) mit Brennstoff und Verbrennungsgas ein Gemisch gebildet wird, welches durch Zündfunken einer Zündkerze (8), die in einen in dem Zylinder (2) ausgebildeten Brennraum (4) einragt, gezündet und verbrannt wird, wobei der Brennstoff den Zylindern zumessbar ist durch direkte Abgabe in dem jeweiligen Brennraum (4) und durch Abgabe in einen Ansaugbereich des Zylinders (4), wobei eine Steuereinheit (10) die Menge des in den Ansaugbereich abzugebenden Brennstoffes und die direkt in den Brennraum (4) abzugebende Brennstoffmenge in Abhängigkeit des Betriebspunktes der Brennkraftmaschine (1) aufeinander abstimmt und das Brennstoffgemisch konfiguriert, wobei wenigstens für bestimmte Betriebsbereiche der Brennkraftmaschine (1) eine Betriebsart vorgesehen ist, bei der im Brennraum (4) ein mageres Brennstoffgrundgemisch durch direkte Brennstoffabgabe in den Brennraum (4) während des Kompressionstaktes des Zylinders (2) (Zündeinspritzung) angereichert wird,
**dadurch gekennzeichnet,**
**daß** bei der Gemischbildung dem zugeführten Kraftstoff/Luft-Gemisch Abgas der Brennkraftmaschine (1) beigemischt wird und dadurch im Brennraum (4) ein inertes Brennstoffgrundgemisch mit hohem Abgasgehalt gebildet wird und kurz vor dem Zündzeitpunkt dem Brennraum (4) im Bereich vor der Zündkerze eine bestimmte Menge Brennstoff mit einem sauerstoffhaltigen Frischgasstrom als Brennstoffgas eingeblasen und dadurch in diesem Bereich das Brennstoffgrundgemisch verdrängt wird.

2. Verfahren nach Anspruch 1,
**dadurch gekennzeichnet,**
**daß** das beizumischende Abgas wenigstens teilweise durch Rückhaltung und Rücksorgung der Verbrennungsabgase im Brennraum (4) durch Einstellung der Steuerzeit und des Ladungswechsels des Zylinders (2) bereitgestellt wird.

3. Verfahren nach einem der Ansprüche 1 oder 2,
**dadurch gekennzeichnet,**
**daß** das Einblasventil (9) für die Zündeinspritzung unabhängig von der Steuereinheit (10) für die Gemischbildung angesteuert wird. ,

4. Verfahren nach einem der Ansprüche 1 bis 3,
**dadurch gekennzeichnet,**
**daß** die Steuerung der Zündeinspritzung an die Steuerung der Gaswechselventile der Zylinder (2) gekoppelt ist.

5. Verfahren nach einem der Ansprüche 1 bis 4,
**dadurch gekennzeichnet,**
**daß** das Brennstoffgas aus einem nahe der Zündkerze (8) mündenden Einblasventil (9) unmittelbar vor die Zündelektroden geblasen wird.

6. Verfahren nach Anspruch 5,
**dadurch gekennzeichnet,**
**daß** das Einblasventil (9) als Kolben/Zylindereinheit ausgebildet ist und mit einem Kolbenelement (16) Luft fördert.

7. Verfahren nach Anspruch 6,
**dadurch gekennzeichnet,**
**daß** das Kolbenelement (16) von einer Nockenwelle der Brennkraftmaschine (1) zwangsgesteuert ist.

8. Verfahren nach einem der Ansprüche 5 bis 7,
**dadurch gekennzeichnet,**
**daß** das Einblasventil (9) mit einem Düsenelement (19) einen gerichteten Brennstoffgasstrom erzeugt.

9. Verfahren nach einem der Ansprüche 1 bis 8,
**dadurch gekennzeichnet,**
**daß** die von der Steuereinheit (10) abstimmbare Zumessung des Brennstoffs für das Grundgemisch mittels wenigstens eines im Ansaugbereich angeordneten Saugrohrinjektors (7) erfolgt.

10. Verfahren nach Anspruch 9
**dadurch gekennzeichnet,**
**daß** die Zumessung des Brennstoffs für das Grundgemisch durch aufeinander abgestimmte Brennstoffabgabe des Saugrohrinjektors (7) und direkte Brennstoffabgabe in den Brennraum erfolgt.

11. Verfahren nach einem der Ansprüche 1 bis 10,
**dadurch gekennzeichnet,**
**daß** das eingeblasene Brennstoffgas Volumina von 5 mg bis 25 mg Luft und Kraftstoff von 0,5 mg bis 8 mg enthält.
